# EUROPEAN PATENT SPECIFICATION

(11) **EP 0 226 329 B1**
(45) Date of publication and mention of the grant of the patent: **01.06.1994**
(21) Application number: 86308787.0
(22) Date of filing: 12.11.1986
(51) Int. Cl.: F27D 13/00, F27B 15/00, F27B 19/04, C04B 7/45, C04B 7/34

(54) **Calcination apparatus for use in a fluidized-bed installation for burning powdery materials**
Brennapparat in einer Flussbettanlage zum Brennen von pulverigen Stoffen
Appareil de calcination utilisé dans une installation de cuisson de matières en poudre

(30) Priority: 13.11.1985 JP 252946/85
(43) Date of publication of application: 24.06.1987
(73) Proprietor: ISHIKAWAJIMA-HARIMA JUKOGYO KABUSHIKI KAISHA, Chiyoda-ku Tokyo 100 (JP); CHICHIBU CEMENT KABUSHIKI KAISHA, Chiyoda-ku Tokyo (JP); Chichibu Engineering Kabushiki Kaisha, Fukaya-shi Saitama-ken (JP)
(72) Inventor: Ichiyanagi, Toshikazu, Kumagaya-shi Saitama-ken (JP); Suto, Kanzaburo, Kodama-gun Saitama-ken (JP); Negishi, Tamotsu, Chichibu-shi Saitama-ken (JP); Komatsu, Yasuo, Kumagaya-shi Saitama-ken (JP); Sekine, Shoji, Niiza-shi Saitama-ken (JP); Teshigawara, Hiroshi, Koshigaya-shi Saitama-ken (JP); Higuchi, Satoru, Tokorozawa-shi Saitama-ken (JP); Kikuchi, Masaharu, Isogo-ku, Yokohama-shi Kanagawa-ken (JP); Yokomizo, Hiroshi, Kanagawa-ken (JP)
(74) Representative: Jennings, Nigel Robin

(56) References cited:
- EP-A- 0 165 034
- DE-A- 2 325 468
- FR-A- 2 290 644
- FR-A- 2 538 521
- US-A- 3 364 589

## Description

The present invention relates to a fluidized-bed burning installation for powdery raw materials which includes calcination apparatus, and more particularly to such an installation in which powdery raw materials for cement or alumina are burned in a fluidized-bed burning furnace. The invention is concerned with that type of installation defined by the preamble of Claim 1.

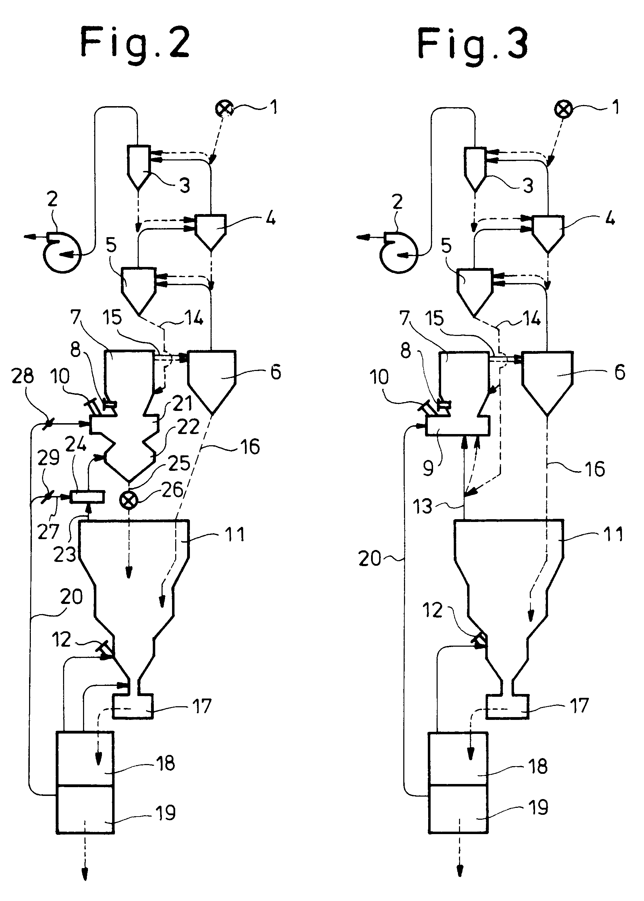

A conventional fluidized-bed burning installation for cement is illustrated diagrammatically in Figure 3. This installation comprises means 1 for supplying cement powdery raw materials; a main exhaust fan 2; a first, second and third cyclones 3, 4 and 5 of a suspension preheater; a fourth or lowermost cyclone 6; a calcining furnace 7; a burner 8; a vortex chamber 9 which is disposed immediately below the calcining furnace 7 and supplies swirling secondary burning air to the furnace 7; a burner 10; a fluidized-bed burning furnace 11; a burner 12; a riser duct 13 for supplying high-temperature exhaust gas at e.g. 1300 - 1350°C from the fluidized-bed burning furnace 11 into the vortex chamber 9; a chute 14 for supplying the preheated raw materials to the calcining furnace 7 and riser duct 13; a horizontal duct 15 connecting the calcining furnace 7 to the lowermost cyclone 6; a chute 16 for supplying the calcined powdery raw materials from the lowermost cyclone 6 to the fluidized-bed burning furnace 11; a classifier 17 for classifying cement clinker burned in the fluidized-bed burning furnace 11; a primary cooler 18 for air cooling the high temperature cement clinker; a secondary cooler 19; and a duct 20 for supplying the secondary combustion air required in the calcining furnace 7 from the secondary cooler 19 to the vortex chamber 9. The arrows in solid lines indicate the flows of air and gas while the arrows in chainlines indicate the flows of the powdery raw materials and clinker.

The powdery raw materials are preheated by exhaust gas as they flow through the cyclones 3, 4 and 5 and the ducts therebetween. The preheated powdery raw materials from the cyclone 5 pass through the chute 14 into the riser duct 13 and calcining furnace 7. Thereafter they are calcined in the calcining furnace 7 and flow through the horizontal duct 15 into the lowermost cyclone 6 and then pass through the chute 16 into the fluidized-bed burning furnace 11 where they are burned into cement clinker.

When the hydraulic modulus of the cement raw materials expressed by the function: 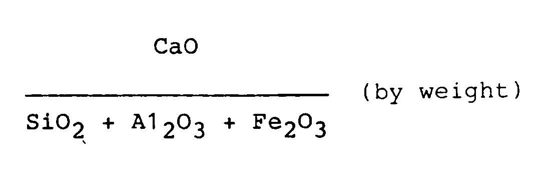
increases to a value in excess of 2.2, the growth of the clinker particles in the fluidized-bed burning furnace 11 stops unless the temperature in the furnace 11 is increased to as high as 1350°C. Clinker particles whose growth has stopped scatter and are entrained in the flowing exhaust gas and caused to circulate through the fluidized-bed burning furnace 11, the riser duct 13, the vortex chamber 9, the calcining furnace 7, the horizontal duct 15, the lowermost cyclone 6, the chute 16 and into the fluidized-bed burning furnace 11 again. As a result, relatively low-temperature clinker particles are returned to the fluidized-bed burning furnace 11, the temperature in it cannot be raised as high as 1350°C and the cement production capacity is adversely affected.

When clinker particles less than about two millimetres in size are entrained in the exhaust gas flowing from the fluidized-bed burning furnace 11, they pass through the freeboard in the fluidized-bed furnace 11 and then flow into the riser duct 13 through which the gas flows at a high velocity (about 25 metres per second). They cannot drop down into the fluidized-bed furnace 11, but flow upward into the calcining furnace 7. They cannot however flow through the inner low-velocity portion (about four metres per second) in the calcining furnace 7 but stay in the calcining furnace 7,forming a spouting bed. As a result, draft variations occur so that there arises the problem that balance of the system is impaired because the draft variations adversely affect the dust collection efficiency (that is to say, the efficiency of separating the powdery raw materials from the exhaust gas) of the cyclones 3, 4 and 5 of the upstream suspension preheater.

Furthermore, in order to maintain the degree of calcination at about 85% without clogging, the gas temperature at the exit of the lowermost cyclone 6 must be maintained at a set value of 860°C. However, in the conventional calcining furnace 7, the spouting bed suppresses the rotational effect of the secondary combustion air charged into the vortex chamber 9 so that the powdery raw materials charged into the calcining furnace 7 swirl to an inadequate extent and take a shortened pathway through the furnace 7, whereby the retention time of the raw materials in the calcining furnace 7, and also the combustion efficiency of the burners 8 and 10 are reduced. As a consequence, the calcination efficiency cannot be maintained at the desired level. In order to attain a calcination degree of 85%, the gas temperature at the exit of the lowermost cyclone 6 must be maintained at about 870°C. However, this results in the gas temperature at the exit of the third cyclone 5 increasing as high as about 790°C which in turn produces the problem that the powdery raw materials become viscous, thereby causing clogging of the third cyclone 5.

The present invention was made to overcome the above problems and has as its object the provision of a fluidized-bed burning installation for powdery materials, including calcination apparatus, of the type described above in which the calcination efficiency is improved, the dust collection efficiency of the cyclones in the suspension preheater is improved, thus attaining an energy saving, and pulsation in the calcining furnace is minimized to maintain a high degree of balance of the whole system.

Another relevant known installation is described in FR-A-2290644. This installation includes a rotary kiln rather than a fluidized bed furnace. A vortex chamber is mounted below a calcining furnace and exhaust gas from the kiln flows upwardly through a riser duct into the vortex chamber and then flows into the calciner, into which powder to be calcined is introduced from a preheater cyclone.

The powder is partially calcined and transferred into a further cyclone and from there the calcined particles are transferred into the kiln whilst those particles which have not been calcined are transferred into the riser duct and returned to the vortex chamber and then the calciner for further calcining. Unlike in a fluidized bed installation, clinker particles from the rotary kiln are not entrained in the kiln exhaust.

According to the present invention calcination apparatus of the type referred to above is characterized by the characterising features of Claim 1.

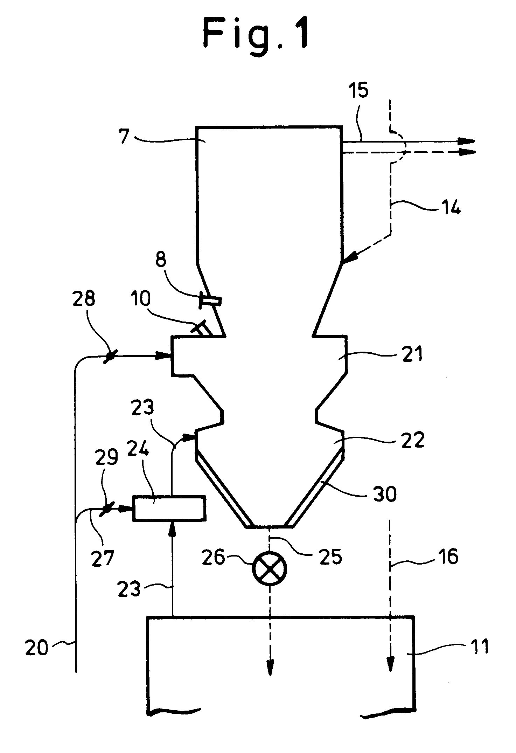

Further features and details of the present invention will be apparent from the following description of one specific embodiment thereof which is given by way of example with reference to Figures 1 and 2 of the accompanying diagrammatic drawings, in which:-
Fig. 1 is a side elevation of a calcining furnace of an installation in accordance with the present invention; and
Fig. 2 is a side elevation of a cement burning installation incorporating the furnace shown in Figure 1.
The same reference numerals are used to designate similar items throughout the figures.

Immediately below the calcining furnace 7 is an upper vortex chamber 21 which corresponds to the vortex chamber 9 shown in Figure 3 and which communicates with the secondary combustion air supply duct 20 so that the secondary combustion air is caused to swirl in the vortex chamber 21 and is then supplied to the calcining furnace 7. Immediately below the upper vortex chamber 21 and communicating with it is a cyclone type lower vortex chamber 22. The gas discharged from the fluidized-bed burning furnace 11 is introduced into the lower vortex chamber 22 where the entrained clinker particles are separated. The gas flows from the furnace 11 through a riser duct 23 which extends upwardly from the furnace 11, passes around the lower vortex chamber 22 and communicates with the inlet thereof. The riser duct 23 includes a mixing chamber 24 connected via a branch duct 27 to receive part of the secondary combustion air flowing through the secondary combustion air supply duct 20, whereby the introduced secondary combustion air is caused to swirl and to be mixed with the exhaust gas from the fluidized-bed burning furnace 11. A chute 25 is provided for returning the clinker particles separated and trapped in the lower vortex chamber 22 into the fluidized-bed burning furnace 11. A sealed feeder 26, such as a rotary feeder or a weight type double damper, is provided in the trapped clinker return chute 25.

Reference numerals 28 and 29 indicate dampers 28 and 29 which are provided in the ducts 20 and 27 respectively for adjusting the air flow rates. A water cooling jacket 30 is provided for cooling the lower hopper portion of the lower vortex chamber 22.

In the calcination apparatus described above, those clinker particles which scatter in the fluidized-bed burning furnace 11 and are entrained in the discharged gas from the furnace 11 and flow through the riser duct 23 into the lower vortex chamber 22 are trapped therein. The trapped clinker particles are returned through the trapped clinker return chute 25 to the fluidized-bed burning furnace 11. As a consequence, scattering clinker particles do not flow into the upper vortex chamber 21 and the calcining furnace 7 so that the adverse effects caused by such particles in the conventional calcination apparatus are avoided. Thus, the swirling flow in the upper vortex chamber 21 is not adversely affected and the raw materials do not have a shortened residence time in the calcining furnace 7. Moreover, the combustion efficiency of the burners 8 and 10 is not adversely affected so calcination efficiency of the calcining furnace 7 is improved. In additional, no draft variation occurs so that the collection efficiency of the cyclones 3, 4 and 5 of the suspension preheater and the lowermost cyclone 6 is improved and the cyclones 3, 4, 5 and 6 do not become clogged. Furthermore, the scattering clinker particles do not circulate from the fluidized-bed burning furnace 11 through the calcining furnace 7, the horizontal duct 15, the lowermost cyclone 6 and the chute 16 and back to the furnace 11 so that a saving in fuel cost is attained and the capacity of the furnace 11 is increased. The gas from the riser duct 23 swirls in the lower vortex chamber 22 and then flows through the upper vortex chamber 21 into the calcining furnace 7 so that the swirling motion therein is enhanced. Part of the secondary combustion air is introduced through the duct 27 into the mixing chamber 24 and is mixed with the gas from the furnace 11 whereby its temperature is reduced. Therefore, the size of the portion of the wall of the riser duct 23 which is water cooled to prevent build-up of a coating can be reduced. Moreover, according to the present invention, a water cooling jacket 30 is attached to the hopper wall portion of the lower vortex chamber 22 so that a coating build-up thereon can be prevented.

## Claims

1. A burning installation for powdery materials comprising a suspension preheater (3,4,5), a calcining furnace (7), an upper vortex chamber (21) disposed immediately below the calcining furnace (7), a fluidised-bed burning furnace (11), a cyclone separator (6) between the calcining furnace (7) and the burning furnace (11) and a cooler (18,19) for cooling the burnt material leaving the furnace (11) which are so arranged that the powdery materials are preheated in the suspension preheater (3,4,5), are calcined in the furnace (7), are separated from the calcining furnace exhaust in the cyclone (6) and passed directly into the burning furnace (11) where they are burnt and then passed through the cooler (18,19) whilst air flows through the cooler (18,19) and is heated therein and part of it then flows into the furnace (11) and through a riser duct (23) into the furnace (7) whilst a part of it flows via a duct (20) into the upper vortex chamber (21) where swirl is induced in the air and then into the furnace (7) as secondary combustion air and the air leaves the furnace (7) via the cyclone (6) and through the suspension preheater (3,4,5), characterised in that a lower vortex chamber (22) of cyclone type suitable for separating clinker particles is disposed immediately below the upper vortex chamber (21) and communicates therewith which is arranged, in use, to receive gas from the burning furnace (11) through the riser duct (23) to separate clinker particles from the said gas and that a chute (25) is provided for returning the separated clinker particles from the lower vortex chamber (22) to the burning furnace (11).

2. An installation as claimed in Claim 1 characterised in that the lower portion of the wall of the lower vortex chamber (22) is provided with a water cooling jacket (30).

3. An installation as claimed in Claim 1 or 2 characterised in that the ducts (20,27) include respective adjustable throttle valves (28,29) situated upstream of the vortex chamber (21) and upstream of a mixing chamber (24) in the riser duct (23), respectively.

## Patentansprüche

1. Brennanlage für pulvrige Materialien, umfassend einen Suspensions-Vorwärmer (3, 4, 5), einen Kalzinierofen (7), eine unmittelbar unterhalb des Kalzinierofens (7) angeordnete obere Wirbelkammer (21), einen Flußbett-Brennofen (11), einen Zyklontrenner (6) zwischen dem Kalzinierofen (7) und dem Brennofen (11) und einen Kühler (18, 19) zum Kühlen des den Ofen (11) verlassenden gebrannten Materials, die so angeordnet sind, daß die pulvrigen Materialien in dem Suspensionsvorwärmer (3, 4, 5) vorgewärmt, in dem Ofen (7) kalziniert, in dem Zyklon (6) von dem Abgas des Kalzinierofens getrennt und direkt in den Brennofen (11) weitergeführt werden, wo sie gebrannt und dann durch den Kühler (18, 19) geleitet werden, während Luft durch den Kühler (18, 19) strömt und darin erwärmt wird, und dann teilweise in den Ofen (11) und durch eine Steigleitung (23) in den Ofen (7) strömt, während ein Teil davon durch eine Leitung (20) in die obere Wirbelkammer (21), wo die Luft verwirbelt wird, und dann als Sekundär-Verbrennungsluft in den Ofen (7) strömt, und die Luft den Ofen (7) über den Zyklon (6) und durch den Suspensions-Vorwärmer (3, 4, 5) verläßt, dadurch gekennzeichnet, daß eine untere Wirbelkammer (22) vom zum Abscheiden von Klinkerpartikeln geeigneten Zyklontyp unmittelbar unter der oberen Wirbelkammer (21) angeordnet ist und mit dieser in Verbindung steht, die so ausgebildet ist, daß sie im Betrieb Gas von dem Brennofen (11) durch die Steigleitung (23) aufnimmt, um Klinkerpartikel von dem Gas zu trennen, und daß eine Rutsche (25) vorgesehen ist, um die abgeschiedenen Klinkerpartikel aus der unteren Wirbelkammer (22) in den Brennofen (11) zurückzuführen.

2. Anlage nach Anspruch 1, dadurch gekennzeichnet, daß der untere Abschnitt der Wand der unteren Wirbelkammer (22) mit einem Wasserkühlmantel (30) versehen ist.

3. Anlage nach Anspruch 1 oder 2, dadurch gekennzeichnet, daß die Leitungen (20, 27) entsprechende einstellbare Drosselventile (28, 29) umfassen, die in Strömungsrichtung vor der Wirbelkammer (21) bzw. vor einer Mischkammer (24) in der Steigleitung (23) angeordnet sind.

## Revendications

1. Installation de cuisson ou de calcination de matières pulvérulentes, cette installation comprenant un préchauffeur (3,4,5) d'une suspension, un four de calcination (7), une chambre (21) supérieure à tourbillon ou à vortex, disposée immédiatement au-dessous du four de calcination (7), un four de cuisson (7) à lit fluidisé, un séparateur (6) en forme de cyclone entre le four de calcination (7) et le four de cuisson (11), et un refroidisseur (18,19) destiné à refroidir la matière cuito sortant du four (11), ces éléments étant disposés de manière que les matières pulvérulentes soient préchauffées dans le préchauffeur (3,4,5) d'une suspension, soient calcinées dans le four (7), soient séparées, dans le cyclone (6) de ce qui sort du four de calcination et envoyées directement dans le four de cuisson (11) où elles subissent une cuisson et sont envoyées ensuite, en traversant le refroidisseur (18,19) pendant que de l'air circule dans ce refroidisseur (18,19) et y est chauffé et qu'une partie de cet air circule ensuite pour pénétrer dans le four (11) et, en empruntant un conduit ascendant (23) pour pénétrer dans le four (7), cependant qu'une partie de l'air circule en empruntant un conduit (20) pour parvenir dans la chambre supérieure (21) à tourbillon où un tourbillon est induit dans l'air, et pour passer ensuite dans le four (7) comme air comburant secondaire, et l'air sort du four (7) en passant par le cyclone (6) et par la préchauffeur (3,4,5) d'une suspension, installation caractérisée en ce qu'une chambre inférieure (22) à tourbillon, du type cyclone, convenant pour séparer des particules de clinker, est disposée immédiatement au-dessous de la chambre supérieure (21) à tourbillon et communique avec elle et est disposée, en service, de façon à recevoir du gaz provenant du four de cuisson (11) en passant par le conduit (23) ascendant pour séparer des particules de clinker de ce gaz, et en ce que l'installation comporte une goulotte (25) pour faire revenir les particules de clinker séparées, de la chambre inférieure (22) à tourbillon vers le four de cuisson (11).

2. Installation telle que revendiquée à la revendication 1, caractérisée en ce que la partie inférieure de la paroi de la chambre inférieure (22) à tourbillon comporte une chemise (30) de refroidissement par de l'eau.

3. Installation telle que revendiquée dans la revendication 1 ou 2, caractérisée en ce que les conduits (20,27) comprennent des clapets respectifs de réglage (28,29) ajustables et situés en amont de la chambre (21) à vortex ou tourbillon et en amont d'une chambre (24) de mélangeage disposée dans le conduit ascendant (23), respectivement.
